# EUROPEAN PATENT APPLICATION

(11) **EP 4 737 535 A1**
(43) Date of publication of application: **06.05.2026**
(21) Application number: 24864979.0
(22) Date of filing: 25.04.2024
(51) Int. Cl.: C10B 57/04, C10B 53/02

(54) **COKE PRODUCTION METHOD**

(30) Priority: 13.09.2023 JP 2023148698
(71) Applicant: JFE Steel Corporation, Tokyo, 100-0011 (JP)
(72) Inventor: KAWAI, Yuya, Tokyo 100-0011 (JP); DOHI, Yusuke, Tokyo 100-0011 (JP); TAKASHIMA, Takanori, Tokyo 100-0011 (JP); IGAWA, Daisuke, Tokyo 100-0011 (JP)
(74) Representative: Hoffmann Eitle
(86) International application number: PCT/JP2024/016346
(87) International publication number: WO 2025/057470

(57) **Abstract**

Provided is a new index for biomass-derived raw material that can replace a portion of coal used in the production of coke for blast furnaces, and a means for producing high-strength coke even when biomass-derived raw material is blended with coal. In a mass distribution of surface tension measured for carbonized biomass to be blended into a coal blend for coke production, a proportion of the carbonized biomass having a value of surface tension equal to or greater than a lower limit value γₘᵢₙ is 60 mass% or more of the total, and volatile content of the carbonized biomass on a dry basis is 4.0 mass% or more.

## Description

### TECHNICAL FIELD

The present disclosure relates to a method of producing coke using biomass as a portion of raw material.

### BACKGROUND

Coke is a mainly carbon agglomerate product obtained by dry-distilling coal. Blast furnace coke used in a blast furnace functions as a heat source and a reducing agent, and also as a support material that secures gas permeability and liquid permeability inside the blast furnace. Therefore, in order to secure stable operation of the blast furnace, the agglomerate coke is required to have sufficient mechanical strength.

In the production of blast furnace coke, a coal blend in which multiple types of coal are blended in a defined proportion is used. The coal blend is dry-distilled at a temperature of 1000 °C or higher either as is or after being molded, to obtain agglomerated coke in which coal particles are bonded together. By using a type of coal called caking coal, which has a property of easily softening and melting, as a portion of the coal blend, it is possible to obtain coke that has high strength.

Two types of measured values of coal have conventionally been used as indices for managing coke strength. One is an average maximum reflectance of vitrinite (hereinafter referred to as "Ro") as specified in Japanese Industrial Standard M 8816:1992 "Solid mineral fuels - Methods of microscopical measurement for the macerals and reflectance". The higher the Ro value of coal, the higher the degree of carbonization and the stronger the coke matrix tends to be. The other is maximum fluidity according to a Gieseler plastometer (hereinafter referred to as "MF"), as specified in Japanese Industrial Standard M 8801:2004 "Coal-testing methods". The higher the MF value of coal, the more the coal tends to soften, melt, and flow when heated.

Patent Literature (PTL) 1, previously filed by the applicant, describes that when selecting a combination of coal types to constitute a coal blend, coal before blending is heated to 500 °C, cooled, and ground, and a measured value of surface tension of the powder is used as a new index. According to this, when coal powders having a small difference in weighted average values of surface tension are combined, the strength of the resulting coke is higher than when coal powders having a large difference in the weighted average values of surface tension are combined.

In recent years, societal efforts to mitigate the impact of global warming by decreasing carbon dioxide emissions into the atmosphere, one of the greenhouse gases, have been accelerating. For this reason, studies are underway to replace a portion of the coal used to make coke with carbon-neutral raw material such as biomass. For example, in PTL 2, a method of producing coke is described in which woody biomass material that has been heat-treated at a temperature higher than 300 °C and 400 °C or less is mixed with coal and dry-distilled in a coke oven. Further, in PTL 3, a method of producing highly reactive blast furnace coke is described, in which biomass is heated to 1000 °C or higher to pyrolyze the biomass, and the resulting solid biomass char having a diameter of 1 mm or less is added to a coal blend.

### CITATION LIST

### Patent Literature

PTL 1: WO 2013/145680 Al
PTL 2: JP 2005-272569 A
PTL 3: JP 2014-077086 A

### Non-Patent Literature

NPL 1: M.C. Williams and D.W. Fuerstenau, "A Simple Flotation Method for Rapidly Assessing the Hydrophobicity of Coal Particles", International Journal of Mineral Processing, Vol. 20, No. 1-2, Netherlands, June 1987, p.153-157.

### SUMMARY

### (Technical Problem)

When attempting to replace a portion of the coal used to make coke with a biomass-derived raw material, even a small substitution ratio can significantly decrease the strength of the resulting coke.

Conventionally, Ro and MF, which are effective indices for managing the strength of coke, are both indices for measurement of coal. Therefore, when attempting to measure Ro and MF for a sample consisting only of biomass-derived raw material, the properties of coal and biomass are significantly different, and therefore it is either impossible to carry out the measurements, or even if the measurements could be carried out, the measured values are not appropriate for use as indices for managing the strength of coke including biomass-derived raw material.

Further, the surface tension previously proposed by the applicant as a new index is an index based on the weighted average value of the surface tensions measured individually for coals that soften and melt when heated to 500 °C. However, biomass does not soften or melt when heated. For this reason, surface tension alone cannot be used as an index for managing the strength of coke containing biomass-derived raw material. Therefore, a new index is needed to manage the strength of coke containing biomass-derived raw material.

In view of the problems described above, it would be helpful to provide a new index for biomass-derived raw material that can replace a portion of the coal used in producing coke for blast furnaces, and to provide a means of producing high-strength coke even when biomass-derived raw material is blended with coal.

### (Solution to Problem)

In order to clarify the cause of the decrease in strength of coke that uses biomass as a portion of the raw material, the inventors of the present patent application conducted detailed observations of defects present inside agglomerate coke having decreased strength. As a result of the observations, it became clear that the coke containing biomass-derived raw material has two main types of defects.

The first type of defect is a defect in which the softened and melted coal does not fuse to the surface of the biomass-derived raw material, and the two are separated. The cause of the first type of defect is thought to be that coal is prone to soften and melt during the heating process of dry distillation, whereas biomass-derived raw material is not carbonized and does not soften or melt.

The second type of defect is a crack caused by breakage of the biomass-derived raw material. The cause of the second type of defect is thought to be a difference in a shrinkage amount between the coal-derived portion and the biomass-derived portion during a shrinkage process after the softened and melted coal resolidifies. Both the first and second type defects can be initiation points for the progression of coke breakage. Therefore, in order to increase the strength of coke, it is necessary to minimize the occurrence of these defects.

Primary features of the present disclosure, which was completed by the inventors based on the above observation results regarding defects present in coke, are as follows.
[1] A method of producing coke, the method comprising:
   dry-distilling a mixture obtained by blending a defined proportion of a coal blend for coke production with carbonized biomass produced by heat-treating biomass, wherein,
   in a mass distribution of surface tension measured for the carbonized biomass, a proportion of the total carbonized biomass having a value of the surface tension equal to or greater than a lower limit value γₘᵢₙ is 60 mass% or more, and
   volatile content of the carbonized biomass on a dry basis is 4.0 mass% or more.
[2] The method of producing coke according to [1], above, wherein the lower limit value γₘᵢₙ of the surface tension is greater than a mass average value γₐᵥₑ in a mass distribution of surface tension measured for a sample obtained by heating the coal blend up to a softening and melting temperature.
[3] The method of producing coke according to [1], above, wherein the lower limit value γₘᵢₙ of the surface tension is greater than 35.0 ± 3.0 mN/m, which is a mass average value in a mass distribution of surface tension measured for a sample obtained by heating the coal blend to 450 °C.
[4] The method of producing coke according to [1], above, wherein the lower limit value γₘᵢₙ of the surface tension is equal to 38.2 mN/m.
[5] The method of producing coke according to any one of [1] to [4], above, wherein the defined proportion of the carbonized biomass in the mixture is 1.0 mass% or more and 8.0 mass% or less.
[6] The method of producing coke according to any one of [1] to [5], above, wherein the biomass that is a raw material of the carbonized biomass contains at least one of palm kernel shells or woody biomass.
[7] The method of producing coke according to any one of [1] to [6], above, wherein measurement of the mass distribution of the surface tension for the carbonized biomass is carried out by a film flotation method.
[8] The method of producing coke according to any one of [1] to [7], above, wherein a proportion of the carbonized biomass having a particle size of 3.0 mm or less is 70 mass% or more, and a proportion of the coal blend having a particle size of 3.0 mm or less is 70 mass% or more.

### (Advantageous Effect)

According to the present disclosure, a property of biomass-derived raw material suitable for replacing a portion of the coal used in the production of coke for use in a blast furnace is revealed. This makes it possible to produce high-strength coke even when biomass-derived raw material is blended with coal. Further, carbon dioxide emissions derived from fossil fuel can be decreased.

### BRIEF DESCRIPTION OF THE DRAWINGS

In the accompanying drawings:
FIG. 1 is a graph illustrating a relationship between heat treatment temperature and surface tension of carbonized biomass in examples; and
FIG. 2 is a graph illustrating a relationship between heat treatment temperature and volatile content of carbonized biomass in examples.

### DETAILED DESCRIPTION

Embodiments of the present disclosure are described in detail below.

According to an embodiment, a method of producing coke includes dry-distilling a mixture obtained by blending a defined proportion of a coal blend for coke production with carbonized biomass produced by heat-treating biomass, wherein, in a mass distribution of surface tension measured for the carbonized biomass, a proportion of the total carbonized biomass having a value of the surface tension equal to or greater than a lower limit value γₘᵢₙ is 60 mass% or more, and volatile content of the carbonized biomass on a dry basis is 4.0 mass% or more.

### [Carbonized biomass]

According to the present embodiment, "biomass" refers to organic industrial resources derived from plants and animals that exist in the current ecosystem. Organic matter that makes up biomass circulates within the ecosystem, changing form. Carbon dioxide produced when biomass is burned originates from carbon absorbed by living organisms as the plants and animals grow, and therefore does not affect the total amount of carbon dioxide in the atmosphere and is considered to be in a so-called carbon-neutral state. In contrast, carbon dioxide produced when fossil fuels are burned originates from underground resources isolated from the current ecosystem, and is therefore not considered to be in a carbon-neutral state. Accordingly, fossil fuels such as coal and petroleum are not included in the biomass according to the present embodiment.

The biomass used according to the present embodiment may be any type of biomass that can be used as an industrial resource, including products produced in fields such as agriculture, forestry, livestock farming, and fisheries, as well as waste generated during the production process, and that satisfies the defined conditions described below. According to a preferred embodiment, the biomass includes at least one of palm kernel shells or woody biomass. Palm kernel shells are biomass produced as a by-product after palm oil is extracted from palm kernels. Palm kernel shells are inexpensive and have adequate strength, and are therefore suitable as the biomass used according to the present embodiment. Examples of woody biomass include biomass made from wood of conifers such as Japanese cedar, pine, and Japanese cypress, and broad-leaved trees such as zelkova, birch, and eucalyptus. The part of the wood is not limited. Woody biomass includes waste wood from construction and papermaking, as well as unused parts such as thinned wood from forestry. Sawdust produced during lumber production is one representative example of woody biomass.

The method of producing coke according to the present disclosure uses carbonized biomass produced by heat-treating biomass. In the heat treatment of the biomass, the biomass is heat-treated in an atmosphere from which air is excluded. By carrying out the heat treatment of the biomass in an atmosphere from which air is excluded, the progress of combustion of the biomass is hindered, and the biomass can be carbonized. To achieve an atmosphere from which air is excluded, for example, a container is prepared that forms a space in which inflow of air is inhibited and an inert gas is allowed to flow, and the biomass is placed inside the container and subjected to heat treatment.

The temperature at which the biomass is heat-treated may be adjusted appropriately depending on the type of the biomass so that the surface tension and volatile content fall within a suitable range. For example, when palm kernel shells are used as the biomass, a temperature of 400 °C or higher is in the suitable range for the surface tension described below, and a temperature of 700 °C or lower is in the suitable range for the volatile content described below, and therefore a temperature of 400 °C or higher and 700 °C or lower is preferred. Similarly, when Japanese cedar is used as the biomass, the temperature is preferably 500 °C or higher. The temperature is preferably 800 °C or lower. The temperature at which the biomass is heat-treated is preferably higher from the viewpoint of surface tension, and is preferably lower from the viewpoint of volatile content. Hereinafter, "heat treatment temperature" refers to a maximum arrival temperature of the biomass when subjected to heat treatment.

The time for which the heat treatment is carried out varies depending on the type of the biomass and the mass of the biomass to be heat-treated at one time, but is preferably 1 min or longer. The heat treatment time is preferably 60 min or shorter. The heat treatment time is more preferably 10 min or longer. The heat treatment time is more preferably 30 min or shorter. Hereinafter, "heat treatment time" refers to a time from when the temperature of the biomass reaches the temperature at which the heat treatment is carried out until the heat treatment temperature is no longer maintained.

The biomass that is heat-treated is converted into carbonized biomass during the heat treatment process. The particle size of the carbonized biomass is preferably such that the proportion of particle size 3.0 mm or less is 70 mass% or more and 100 mass% or less, similar to coal blends used in normal coke production. When the proportion of particle size 3.0 mm or less is 70 mass% or more and 100 mass% or less, the carbonized biomass can be uniformly mixed with the coal blend. A more preferred particle size range for the carbonized biomass is 100 mass% of the carbonized biomass having a particle size of 3.0 mm or less. There is no lower limit on the particle size. That is, the particle size may be greater than 0 (zero).

When the proportion of the carbonized biomass having a particle size of 3.0 mm or less is less than 70 mass%, the carbonized biomass can be ground to adjust the proportion of the carbonized biomass having a particle size of 3.0 mm or less to 70 mass% or more and 100 mass% or less. The particle size adjustment by grinding may be carried out on the biomass prior to heat treatment, on the carbonized biomass after heat treatment, or on both. A known grinder can be used to grind the biomass or the carbonized biomass.

Hereinafter, the term "particle size" corresponds to the nominal aperture size of the test sieve specified in Japanese Industrial Standard Z 8801-1:2019 "Test sieves - Part 1: Test sieves of metal wire cloth". That is, granular material having a particle size larger than X mm is granular material that remains on a sieve when sieved using a sieve having a nominal aperture size of X mm. Granular material having a particle size of Y mm or less is granular material that falls below the sieve when sieved using a sieve having a nominal aperture size of Y mm.

When producing large amounts of carbonized biomass on an industrial scale, yield can be increased and production costs can be decreased by omitting the processes of sorting by sieving or adjusting particle size by grinding, or both. In such a case, it is preferable that the proportion having a particle size of 3.0 mm or less in a particle size distribution of the carbonized biomass based on mass is 70 mass% or more. When particle size adjustment is not carried out, the proportion having a particle size of 3.0 mm or less is more preferably 80 mass% or more. The proportion is even more preferably 90 mass% or more. The upper limit of the proportion of the carbonized biomass having a particle size of 3.0 mm or less is 100 mass%. The particle size distribution of the carbonized biomass based on mass can be determined by a known method from a sample taken from a large amount of produced carbonized biomass, such as measuring the weight of granular material sieved using multiple sieves with different aperture sizes, irradiating a sample with a laser, or the like.

### [Blend]

In the method of producing coke according to the present embodiment, a mixture obtained by blending carbonized biomass with a coal blend for coke production at a defined proportion is dry-distilled to produce coke. The coal blend may be any coal blend suitable for producing coke. A coal blend suitable for producing coke refers to a coal blend that can produce high-strength coke when dry-distilling is carried out with only the coal blend as a raw material. Whether a coal blend is suitable for producing coke or not can be predicted by measuring the Ro and MF values of the coal blend.

A proportion of coal particles having a particle size of 3.0 mm or less in the coal blend for coke production is preferably 70 mass% or more and 100 mass% or less. When the particle size of the coal blend is coarse, a property distribution occurs in coke production using a mixture of components of coal and the like having different properties. The proportion of the coal blend having a particle size of 3.0 mm or less is therefore preferably 70 mass% or more. The proportion of the coal blend having a particle size of 3.0 mm or less is more preferably 75 mass% or more. On the other hand, when the particle size is too fine, bulk density of the coal blend charged into the coke oven decreases, which may cause a decrease in coke strength. The proportion of the coal blend having a particle size of 3.0 mm or less is therefore preferably 90 mass% or less. The proportion of the coal blend having a particle size of 3.0 mm or less is more preferably 85 mass% or less.

In a mixture obtained by blending carbonized biomass in a defined proportion with a coal blend for coke production, when the proportion of the carbonized biomass in the mixture is 1.0 mass% or more, a significant effect in decreasing carbon dioxide emissions can be obtained, and when 8.0 mass% or less, the strength of the obtained coke is not remarkably decreased. Accordingly, the proportion of the carbonized biomass is preferably 1.0 mass% or more. The proportion of the carbonized biomass is preferably 8.0 mass% or less. The proportion of the carbonized biomass is more preferably 2.0 mass% or more. The proportion of the carbonized biomass is more preferably 5.0 mass% or less.

In the method of producing coke according to the present disclosure, the mixture obtained by blending the coal blend and the carbonized biomass in a defined proportion may be sufficiently mixed without carrying out any operation specifically designed for mixing. Specific examples of such cases include a case where a mixture transported by a belt conveyor falls onto the next belt conveyor, a case where a coal blend and carbonized biomass are blended and then ground using grinding apparatus, and a case where a coal blend and carbonized biomass are blended and then moisture content is adjusted while agitating using coal moisture control apparatus. In such cases, the apparatus and costs required for mixing can be reduced, which is preferable.

In the mixture, the coal blend and the carbonized biomass are preferably mixed uniformly. This can help prevent the problem of carbonized biomass that does not soften or melt when heated being unevenly locally concentrated and remaining unsolidified even after the dry distillation process. When the mixing is insufficient, a coal mixer may be used to mix the coal blend with the carbonized biomass. As the coal mixer, for example, a mixer that mainly carries out convective mixing, a mixer that mainly carries out shear mixing, a mixer that carries out a combination of convective mixing and shear mixing, or the like may be used. Here, convective mixing refers to mixing that is primarily caused by convection and diffusion of the sample, and shear mixing refers to mixing that involves shearing, collision, grinding, and the like of the sample.

### [Dry distillation]

In the method of producing coke according to the present embodiment, coke is produced by dry-distilling a mixture obtained by blending carbonized biomass in a defined proportion with a coal blend for coke production. The mixture is charged into a coke oven and heated in an atmosphere from which air is excluded to be dry-distilled.

When the dry distillation temperature is 900 °C or higher, coke having sufficient strength is obtainable. A temperature of 950 °C or higher is more preferable. On the other hand, when the dry distillation temperature exceeds 1250 °C, a huge amount of energy is required for heating, and the coke may thermally decompose, resulting in a decrease in strength. The dry distillation temperature is therefore preferably 1250 °C or lower. The dry distillation temperature is more preferably 1100 °C or lower. The dry distillation temperature refers to the maximum arrival temperature of the mixture during dry distillation.

### [Surface tension]

In the method of producing coke according to the present embodiment, in a mass distribution of surface tension measured for the carbonized biomass, a proportion of the total carbonized biomass having a value of the surface tension equal to or greater than a lower limit value γₘᵢₙ is 60 mass% or more.

Carbonized biomass is not a substance that has a single component and structure, and varies depending on the part, in terms of carbon concentration, molecular weight of constituent molecules, and content of volatile matter. For this reason, the surface tension of the carbonized biomass cannot be determined to a single value, but has a distribution. Therefore, according to the present embodiment, first, the mass distribution of surface tension is determined for the carbonized biomass obtained by heat treatment. As used herein, "mass distribution of surface tension" is represented by a graph in which the horizontal axis represents the surface tension measured for an aggregate of powder of carbonized biomass, and the vertical axis represents the mass or cumulative mass of the powder for each category. A specific method for measuring the mass distribution of surface tension is described later. Next, in the obtained mass distribution of surface tension of the carbonized biomass, carbonized biomass for which a proportion of 60 mass% or more of the total carbonized biomass has a value of the surface tension equal to or greater than a predetermined lower limit value γₘᵢₙ is selected, and only the selected carbonized biomass is used. Alternatively, the conditions for the heat treatment of the biomass may be adjusted so that the proportion of biomass having a surface tension value equal to or greater than the lower limit value γₘᵢₙ is 60 mass% or greater of the total. By using the carbonized biomass that satisfies these conditions, it is possible to produce coke having high strength.

According to the present embodiment, rather than determining whether or not to use carbonized biomass based on a single representative value such as a weighted average value derived from the distribution of surface tension of the carbonized biomass, the only carbonized biomass used is carbonized biomass that has a value of surface tension equal to or greater than the lower limit value γₘᵢₙ accounting for 60 mass% or more of the total in the mass distribution of the surface tension. This makes it possible to accurately determine whether or not carbonized biomass that has a wide range of values of surface tension can be used. According to a preferred embodiment, the proportion that has a value of surface tension equal to or greater than the lower limit value γₘᵢₙ is preferably 70 mass% or more of the total. The proportion of the total is more preferably 80 mass% or more. The upper limit of the proportion having a value of surface tension equal to or greater than the lower limit γₘᵢₙ is 100 mass% of the total.

The lower limit value γₘᵢₙ of the surface tension according to the present embodiment can be determined by preparing in advance multiple types of carbonized biomass that have different lower limit values γₘᵢₙ, blending each type with a coal blend, and then examining the strength of the coke obtained by dry distillation.

The reason why high-strength coke can be produced by using the carbonized biomass that has surface tension adjusted according to the present embodiment is not fully understood, but it is thought to be due to the following reasons. As described above, PTL 1 describes that when coals having similar weighted average values of surface tension are combined, the strength of the resulting coke is higher than when coals having a large difference in weighted average values of surface tension are combined. This means that with regard to adhesion between coals, the smaller the difference in surface tension, that is, the smaller the magnitude of the interfacial tension, the stronger the bond of the coal blend. In contrast, carbonized biomass is a raw material that does not soften or melt like coal. Therefore, when considering the adhesion phenomenon at the interface between coal and carbonized biomass, a different approach is required than the conventional approach to adhesion between coals.

Typically, at the interface between a solid and a liquid, when the surface tension of the solid is greater than the surface tension of the liquid, the liquid can wet the surface of the solid. If this is the case, then when the value of surface tension of the solid carbonized biomass is greater than the value of surface tension of the softened melted coal blend, as a liquid, the softened melted coal blend can wet and spread over the surface of the carbonized biomass in the dry-distilling process, which is thought to result in increased strength of the resulting coke. According to the present embodiment, the lower limit value γₘᵢₙ of the surface tension is determined experimentally or based on the surface tension of the coal blend, and when 60 mass% or more of the carbonized biomass has a surface tension equal to or greater than the lower limit value γₘᵢₙ, wetting occurs at many locations in the mixture. This is thought to prevent the occurrence of type 1 defects in which the coal blend and the carbonized biomass are separated, and as a result, coke that has high strength can be produced.

To determine the mass distribution of surface tension for the carbonized biomass, it is preferable to use the film flotation method described in NPL 1. According to the film flotation method, for an aggregate of powder having a distribution in the magnitude of surface tension, the distribution of surface tension based on the mass of the powder can be determined by a relatively simple procedure. The measurement of the mass distribution of surface tension by the film flotation method is briefly described below.

The film flotation method utilizes the property that when powder particles floating on the surface of a liquid having a known value of surface tension begin to settle, the surface tension of the powder is equal to the surface tension of the liquid. First, a plurality of types of liquids having different surface tensions are prepared. The surface tensions of the liquids are selected to cover the range of values of surface tension of the powder to be measured. For example, when an aqueous solution of ethanol is used as the liquid, the surface tension of ethanol at 20 °C is 22.6 mN/m, and the surface tension of pure water is 72.8 mN/m. Therefore, by adjusting the concentration of ethanol, it is possible to prepare a liquid having any surface tension between 22.6 mN/m and 72.8 mN/m.

The number of mass distribution categories of surface tension to be calculated is determined by the number of types of liquid prepared. According to the present application, the number of types of liquid is not particularly limited, but measurement accuracy is increased when the number is 5 or more, and measurement can be completed in a short time when the number is 20 or less, and therefore the number of types of liquid is preferably 5 or more. The number of types of liquid is preferably 20 or less. The lower limit of the number of categories is more preferably 8 or more. The upper limit of the number of categories is more preferably 15 or less. Further, the difference in surface tension between the liquids is preferably as equal as possible.

Next, the particle size of the carbonized biomass sample to be used for the measurement is adjusted. When the particle size of the sample is 53 µm or more, the sample is less likely to aggregate, and when 150 µm or less, the effect of gravity can be ignored, and therefore the particle size of the sample is preferably 53 µm or more. The particle size of the sample is preferably 150 µm or less.

Next, the mass of the carbonized biomass sample with adjusted particle size is measured, and then the sample is spread onto the surface of the prepared liquid. After a period of time, the sample that has not settled but is floating on the surface of the liquid is collected, mass of the sample after drying is measured, and the proportion to the mass of the sample before the spreading is calculated. This calculated value represents the proportion of the sample that has a surface tension less than that of the liquid. By repeating this series of procedures for all liquids, the mass distribution of surface tension can be determined. The surface tension of a liquid is usually measured at 20 °C, and therefore the temperature of the liquid is preferably controlled at 20 °C when spreading the carbonized biomass sample.

As described above, the mass distribution of surface tension can be represented by a graph with the surface tension on the horizontal axis and the mass or cumulative mass of powder for each category on the vertical axis. The proportion of a sample that has a value of surface tension equal to or greater than the lower limit value γₘᵢₙ can be calculated as the total area equal to or greater than the lower limit value in a frequency distribution graph, or as the difference between a reading at the lower limit value and 100 % in a cumulative frequency graph. When the lower limit value γₘᵢₙ is in between categories of surface tension, the graph reading at the midpoint can be estimated by interpolating the values on either side.

The mass distribution of surface tension measured by the above method shifts in the direction of increasing values of surface tension as the heat treatment temperature of the biomass in the carbonization process increases. This is thought to be because the higher the treatment temperature of the biomass, the more the carbonization of the biomass progresses, and the surface properties of the carbonized biomass change in the direction of increasing the surface tension. Therefore, when the proportion of a sample that has a value of surface tension equal to or greater than the lower limit value γₘᵢₙ in the mass distribution of surface tension measured for the carbonized biomass is less than 60 mass% of the total, the heat treatment temperature of the biomass in the carbonization process can be changed to a higher temperature so that the proportion of the sample having a value of surface tension equal to or greater than the lower limit value γₘᵢₙ becomes 60 mass% or more of the total.

According to a preferred embodiment, the lower limit value γₘᵢₙ of the surface tension is greater than the mass average value γₐᵥₑ in the mass distribution of the surface tension measured for a sample obtained by heating the coal blend up to a softening and melting temperature. As described above, the wettability between the coal blend and the carbonized biomass becomes an issue when the mixture is heated to a softening and melting temperature of the coal blend in the dry-distilling process. It is thought that coal blends typically soften and melt in a temperature range from 350 °C to 550 °C. Therefore, theoretically, when the surface tension of the carbonized biomass is greater than the surface tension of the coal blend in this temperature range, the wettability of the two will be good. However, as mentioned above, the film flotation method uses a liquid at 20 °C, and therefore there is no known means for measuring the mass distribution of surface tension in situ in a temperature range of 350 °C or higher.

Therefore, according to a preferred embodiment, instead of measuring the surface tension of the coal blend in situ at a softening and melting temperature, the mass distribution of the surface tension of a sample obtained by heating the coal blend to a softening and melting temperature is measured using a liquid at 20 °C, and a mass average value (weighted average) γₐᵥₑ is determined. The lower limit value γₘᵢₙ of the surface tension of the carbonized biomass is set to be greater than the mass average value γₐᵥₑ. This allows the lower limit value γₘᵢₙ of the surface tension to be determined with fewer steps based on reasonably obtainable measured values, rather than being determined experimentally by trial and error.

The reason why the surface tension measured at 20 °C serves as an indicator of wettability in the temperature range from 350 °C to 550 °C, where the surface of the coal blend softens and melts, is as follows. In a sample obtained by heating a coal blend to a softening and melting temperature, the chemical composition of the material changes to such an extent that the measured value of surface tension changes due to the softening and melting of the coal. These changes remain in the coal blend as a thermal history, and the changed state is maintained even after the coal blend is cooled to 20 °C. Therefore, it is thought that the surface tension measured at 20 °C reflects the change in state when heated to a softening and melting temperature. Similarly, it is thought that the thermal history of heat-treated carbonized biomass at the heat treatment temperature is reflected in the measured value of surface tension measured at 20 °C.

According to a preferred embodiment, the lower limit value γₘᵢₙ of the surface tension is greater than 35.0 ± 3.0 mN/m, which is the mass average value in the mass distribution of the surface tension measured for a sample obtained by heating the coal blend to 450 °C. When the fluidity of coal used in the production of coke is measured using a Gieseler plastometer, many coals exhibit a maximum fluidity (MF) at around 450 °C. That is, from the viewpoint of fluidity, it is thought that coal softens and melts most rapidly at 450 °C. Therefore, according to the preferred embodiment, 450 °C is representative of the temperature at which the coal blend softens and melts.

In order to measure the surface tension of a coal blend, several types of coal having different origins and grades were dry-distilled up to 450 °C in an inert gas atmosphere to obtain semi-coke. The mass distribution of the surface tension of the obtained semi-coke was measured by the film flotation method, and the mass average value was found to be in the range of 35.0 ± 3.0 mN/m. Therefore, according to this preferred embodiment, the lower limit value γₘᵢₙ of the surface tension is set to a value greater than 35.0 ± 3.0 mN/m. The surface tension of semi-coke varies within a range of ±3.0 mN/m, and therefore the lower limit value γₘᵢₙ of the surface tension is preferably set to a value greater than 38.0 mN/m. From the viewpoint of not excessively narrowing the range of application of usable carbonized biomass, the lower limit value γₘᵢₙ of the surface tension is preferably set to a value of 40.0 mN/m or less.

According to a preferred embodiment, the lower limit value γₘᵢₙ of the surface tension is equal to 38.2 mN/m. The surface tension of a water (80 %)-ethanol (20 %) mixed solution at 20 °C is 38.2 mN/m. This value happens to be greater than 38 mN/m. Further, a water (80 %)-ethanol (20 %) mixed solution can be easily prepared. Therefore, the lower limit value γₘᵢₙ of the surface tension according to this preferred embodiment is 38.2 mN/m.

According to this preferred embodiment, instead of determining the mass distribution of surface tension in the film flotation method, the measurement of surface tension can be simplified by using only one type of liquid, a water (80 %)-ethanol (20 %) mixed solution. Specifically, the carbonized biomass sample having a particle size adjusted by a method described above is spread onto the surface of a water (80 %)-ethanol (20 %) mixed solution at 20 °C. After a period of time has passed, any of the sample that has not settled and is floating on the liquid surface is collected and its mass is measured after drying. The mass of the settled sample is calculated by subtracting the mass of the floating sample from the mass of the sample before spreading. The surface tension of the settled sample is 38.2 mN/m or more, and therefore when the proportion is 60 mass% or more, the surface tension condition of the present disclosure is satisfied.

### [Volatile content]

In the method of producing coke according to the present embodiment, the volatile content of the carbonized biomass on a dry basis is 4.0 mass% or more. According to the present embodiment, the analysis of the volatile content of the carbonized biomass is carried out in accordance with the method specified in Japanese Industrial Standards M 8812:2004 "Coal and coke - Methods for proximate analysis". By using the volatile content on a dry basis, the volatile content can be appropriately managed even when moisture subsequently adheres to the carbonized biomass.

According to the present embodiment, the volatile content of carbonized biomass is analyzed, and only the carbonized biomass having a volatile content of 4.0 mass% or more is selected, and only the selected carbonized biomass is used. Alternatively, the conditions for the heat treatment of the biomass may be adjusted so that the volatile content becomes 4.0 mass% or more. By using the carbonized biomass that has a volatile content of 4.0 mass% or more, it is possible to produce coke having high strength. According to a preferred embodiment, the volatile content of the carbonized biomass on a dry basis is 5.0 mass% or more.

The reason why high-strength coke can be produced by using the carbonized biomass having a volatile content of 4.0 mass% or more is not fully understood, but it is thought to be due to the following reasons. In the process of producing coke by dry-distilling coal, the coal softens and melts at temperatures of 300 °C or higher and adheres to itself, and then solidifies again at temperatures of 500 °C or more, becoming a solid whole. When then heated to 1000 °C, the coal shrinks as the volatile matter contained in the coal is released. In this process, it is believed that the more volatile matter contained in the coal, the greater the shrinkage amount of the coal due to the release of volatile matter. Similarly, it is believed that the more volatile matter contained in the carbonized biomass, the greater the shrinkage amount of the carbonized biomass due to the release of volatile matter.

As described above, inside the coke containing biomass-derived raw material, there are defects (type 2 defects) that are cracks caused by the breaking of portions that are biomass-derived raw material. The cause of this defect is thought to be a difference in the shrinkage amount between the coal-derived portion and the biomass-derived portion during the shrinkage process after the softened and melted coal resolidifies. When the volatile matter contained in the carbonized biomass is less than 4.0 mass%, the carbonized biomass-derived portion hardly shrinks, and the surrounding coal blend-derived portion shrinks, which is thought to result in stress being applied to the carbonized biomass-derived portion, causing cracks. According to the present embodiment, the volatile matter contained in the carbonized biomass is 4.0 mass% or more, and therefore the carbonized biomass-derived portion and the surrounding coal blend-derived portion shrink to a similar extent, and as a result, it is thought that the occurrence of type 2 defects may be prevented.

The amount of volatile matter contained in the carbonized biomass decreases as the heat treatment temperature of the biomass in the carbonization process increases. This is thought to be because the higher the heat treatment temperature of the biomass, the more volatile matter is released from the biomass. Therefore, when the volatile content measured for the carbonized biomass is less than 4.0 mass%, the heat treatment temperature of the biomass can be changed to a lower temperature to adjust the volatile content to 4.0 mass% or more. The volatile content can be adjusted by changing the heat treatment temperature, the heat treatment time, the type of the biomass used, and the like. Of these means, the means for changing the temperature of the heat treatment is preferable due to ease of control.

In the method of producing coke according to the present embodiment, the lower limit of the volatile content of the carbonized biomass on a dry basis is 4.0 mass% or more, but an upper limit is not particularly specified. However, when the volatile content is adjusted by changing the heat treatment temperature of the biomass in the carbonization process, as described above, the value of the surface tension decreases as the heat treatment temperature of the biomass in the carbonization process decreases. For this reason, the heat treatment temperature cannot be lowered until the cumulative mass of the carbonized biomass having a surface tension value equal to or greater than the lower limit value γₘᵢₙ becomes less than 60 mass% of the total mass. Taking this into consideration, the volatile content preferably does not exceed 35 mass%.

As explained above, according to the present embodiment, by using the carbonized biomass having the surface tension and the volatile content in defined ranges, coke having higher strength can be produced. The conditions for heat treatment that will bring the surface tension and volatile content within the defined ranges vary greatly depending on the type of biomass used. For this reason, the conditions for the heat treatment are preferably determined individually for each type of biomass used. Among the heat treatment conditions, the temperature varies depending on the type of biomass and other heat treatment conditions, but by carrying out heat treatment at a temperature of about 400 °C or higher and 800 °C or lower, the surface tension and the volatile content can often be adjusted to within the ranges specified according to the present embodiment.

### [Strength evaluation]

The effects of the present disclosure can be confirmed by evaluating the strength of the coke obtained by the method of producing coke according to the present embodiment. There are various methods for evaluating the strength of coke. Among them, the method of evaluating tumble strength of coke by the drum method specified in Japanese Industrial Standard K 2151:2004 "Coke - Testing methods" is preferable because it is a test that simulates the generation of dust from coke, which is a problem when used in a blast furnace, and is currently the most widely used method in Japan. The drum method is a method in which a sample is inserted into a specified drum testing machine, rotated at a specified speed for a specified number of revolutions, and then sieved through a defined sieve to determine the mass of each category, and the summed percentage (%) of the mass relative to the sample is expressed as the drum strength index (symbol: DI).

As described later, in the EXAMPLES section of this description, the rotation speed of the drum was set to 150 rpm, and the drum strength index (%) was defined as the proportion of the mass of coke that did not pass through a sieve having an aperture size of 15 mm after rotation to the mass of coke inserted into the drum testing machine. The drum strength index indicates the mass fraction of coke that was not ground to a size of 15 mm or less when rotated in the drum testing machine. A larger DI value indicates a higher coke strength.

### EXAMPLES

The following describes Examples of the present disclosure. Embodiments of the present disclosure are not limited to the following Examples, and embodiments of the present disclosure can be modified as desired without departing from the gist of the present disclosure.

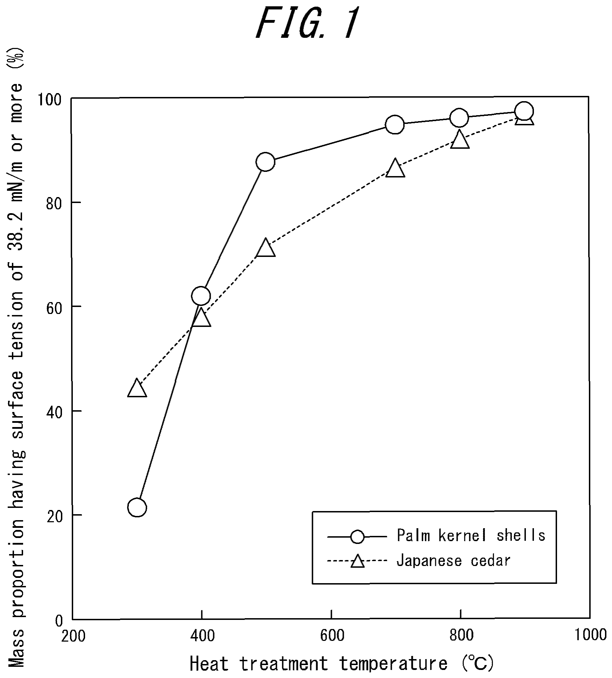

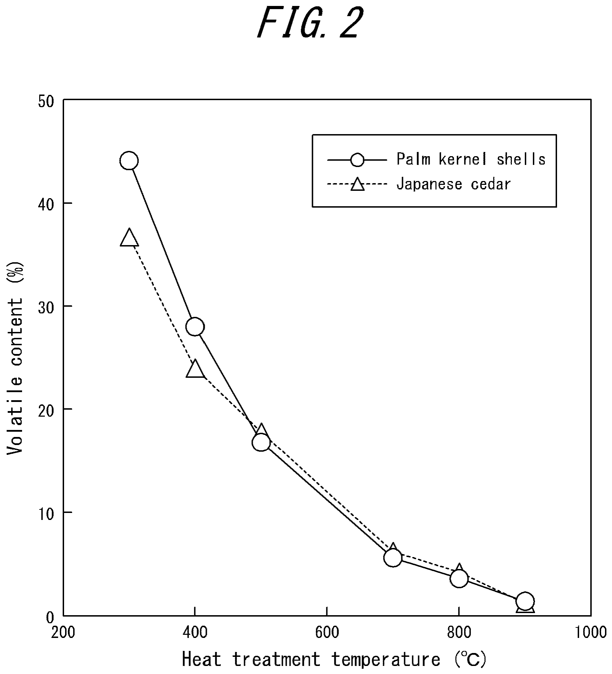

A coal blend having an Ro of 1.0 % and a common logarithm of MF (log(MF/ddpm)) of 2.5 was prepared. The coal blend was ground to produce a coal blend in which the proportion of particles having a particle size of 3.0 mm or less was adjusted to 100 mass%. Two types of biomass were prepared: palm kernel shells and Japanese cedar. These biomasses were individually subjected to heat treatment in an atmosphere from which air was excluded under conditions where the temperature of the biomass was 400 °C, 500 °C, 700 °C, 800 °C, or 900 °C, to obtain carbonized biomass. These carbonized biomasses were ground to prepare carbonized biomass samples in which the proportion of particles having a particle size of 3.0 mm or less was adjusted to 100 mass%. For the obtained carbonized biomass samples, the mass proportion of each sample having a surface tension of 38.2 mN/m or more was measured using a water (80 %)-ethanol (20 %) mixed solution at 20 °C, and the volatile content on a dry basis was also measured. The measured values are listed in Table 1. Change in the mass proportion of the sample having a surface tension of 38.2 mN/m or more with respect to the heat treatment temperature is illustrated in FIG. 1, and change in the volatile content on a dry basis with respect to the heat treatment temperature is illustrated in FIG. 2.

### [Table 1]

**Table 1**

| | Carbonized biomass | | | | Blend proportion (%) |
|---|---|---|---|---|---|
| | Type | Heat treatment temperature (°C) | Mass proportion having surface tension of 38.2 mN/m or more (%) | Volatile content (%) | |
| Example 1 | Palm kernel shells | 400 | 62.0 | 28.0 | 2.0 |
| Example 2 | Palm kernel shells | 400 | 62.0 | 28.0 | 5.0 |
| Example 3 | Palm kernel shells | 500 | 87.6 | 16.8 | 2.0 |
| Example 4 | Palm kernel shells | 500 | 87.6 | 16.8 | 5.0 |
| Example 5 | Palm kernel shells | 700 | 94.7 | 5.6 | 2.0 |
| Example 6 | Japanese cedar | 500 | 71.3 | 17.8 | 2.0 |
| Example 7 | Japanese cedar | 500 | 71.3 | 17.8 | 4.0 |
| Example 8 | Japanese cedar | 700 | 86.5 | 6.2 | 4.0 |
| Example 9 | Japanese cedar | 800 | 92.0 | 4.2 | 2.0 |
| Comparative Example 1 | Palm kernel shells | 300 | 21.4 | 44.1 | 2.0 |
| Comparative Example 2 | Palm kernel shells | 800 | 96.0 | 3.6 | 2.0 |
| Comparative Example 3 | Palm kernel shells | 900 | 97.2 | 1.4 | 2.0 |
| Comparative Example 4 | Japanese cedar | 300 | 44.5 | 36.7 | 2.0 |
| Comparative Example 5 | Japanese cedar | 400 | 58.0 | 24.0 | 2.0 |
| Comparative Example 6 | Japanese cedar | 900 | 96.4 | 1.2 | 2.0 |

| | | | | | |
|---|---|---|---|---|---|
| Underlining indicates value outside scope of present disclosure. | | | | | |

According to the above measurement results, the higher the heat treatment temperature of the carbonized biomass, the greater the mass proportion of the sample having a surface tension of 38.2 mN/m or more, and the lower the volatile content. The heat treatment temperature at which the proportion of the sample having a surface tension of 38.2 mN/m or more was 60 mass% or more of the total and the volatile content was 4.0 mass% or more was in the range from 400 °C to 700 °C for palm kernel shells, and the range from 500 °C to 800 °C for Japanese cedar.

Next, the coal blend and the carbonized biomass were blended so that the carbonized biomass blend proportion in the mixture was 2.0 %, 4.0 %, or 5.0 %, and the moisture content was adjusted to 8.0 mass%, and 16 kg of each mixture was prepared for each type of carbonized biomass. This mixture was loaded into a stainless steel container, which was then placed in an electric furnace through which nitrogen gas was circulated, where heating and dry distillation was carried out. The bulk density of the mixture in the container was 775 kg/m³ on a dry basis. The container loaded with the mixture was charged into an electric furnace set at a furnace wall temperature of 1050 °C, and the furnace wall temperature was maintained for 6 hours from charging to carry out dry distillation. The container was then transferred to a cooling apparatus through which nitrogen gas at room temperature was circulated to carry out cooling, obtaining coke containing biomass as a raw material. Further, in order to compare the drum tumble strength, the same coal blend alone was dry-distilled under the same conditions to obtain coke that did not contain biomass as a raw material. Next, the drum strength index (DI) of the obtained coke was measured under the conditions of a drum rotation speed of 150 rpm and a sieve aperture size of 15 mm. The measured DI of the blend without carbonized biomass was 79.1. A difference ΔDI between the obtained measurement values and the drum strength index of coke containing no biomass in the raw material was calculated. The calculated ΔDI values are listed in Table 2.

### [Table 2]

**Table 2**

| | ΔDI |
|---|---|
| Example 1 | -1.6 |
| Example 2 | -1.8 |
| Example 3 | 0.1 |
| Example 4 | -0.9 |
| Example 5 | -0.9 |
| Example 6 | 0.4 |
| Example 7 | -0.7 |
| Example 8 | -1.7 |
| Example 9 | -1.8 |
| Comparative Example 1 | -8.2 |
| Comparative Example 2 | -6.4 |
| Comparative Example 3 | -10.1 |
| Comparative Example 4 | -6.2 |
| Comparative Example 5 | -5.4 |
| Comparative Example 6 | -8.0 |

According to Tables 1 and 2, for the cokes of Examples 1 to 9, which were made from mixtures containing carbonized biomass that satisfied both the surface tension and volatile content ranges of the present disclosure, the ΔDI values did not decrease by more than -2.0 %. When ΔDI does not decrease by more than -2.0 %, it can be said that this is a level that does not pose a practical problem, since the strength of the coke can be adjusted by adjusting the grade of the coal blend and the production conditions. In contrast, for the cokes of Comparative Examples 1 to 6, which had surface tension or volatile content outside the ranges of the present disclosure, a large decrease in drum tumble strength was observed. Therefore, it can be seen that the method of producing coke according to the present disclosure can produce coke having higher strength, based on more reliable predictions than conventional technology.

### INDUSTRIAL APPLICABILITY

According to the method of producing coke of the present disclosure, it is possible to produce coke having high strength that can withstand use in a blast furnace, even when a portion of the coal that is a raw material for the coke is replaced with biomass-derived raw material.

## Claims

1. A method of producing coke, the method comprising:
dry-distilling a mixture obtained by blending a defined proportion of a coal blend for coke production with carbonized biomass produced by heat-treating biomass, wherein,
in a mass distribution of surface tension measured for the carbonized biomass, a proportion of the total carbonized biomass having a value of the surface tension equal to or greater than a lower limit value γₘᵢₙ is 60 mass% or more, and
volatile content of the carbonized biomass on a dry basis is 4.0 mass% or more.

2. The method of producing coke according to claim 1, wherein the lower limit value γₘᵢₙ of the surface tension is greater than a mass average value γₐᵥₑ in a mass distribution of surface tension measured for a sample obtained by heating the coal blend up to a softening and melting temperature.

3. The method of producing coke according to claim 1, wherein the lower limit value γₘᵢₙ of the surface tension is greater than 35.0 ± 3.0 mN/m, which is a mass average value in a mass distribution of surface tension measured for a sample obtained by heating the coal blend to 450 °C.

4. The method of producing coke according to claim 1, wherein the lower limit value γₘᵢₙ of the surface tension is equal to 38.2 mN/m.

5. The method of producing coke according to any one of claims 1 to 4, wherein the defined proportion of the carbonized biomass in the mixture is 1.0 mass% or more and 8.0 mass% or less.

6. The method of producing coke according to any one of claims 1 to 5, wherein the biomass that is a raw material of the carbonized biomass contains at least one of palm kernel shells or woody biomass.

7. The method of producing coke according to any one of claims 1 to 6, wherein measurement of the mass distribution of the surface tension for the carbonized biomass is carried out by a film flotation method.

8. The method of producing coke according to any one of claims 1 to 7, wherein a proportion of the carbonized biomass having a particle size of 3.0 mm or less is 70 mass% or more, and a proportion of the coal blend having a particle size of 3.0 mm or less is 70 mass% or more.
